# FASCICULE DE BREVET EUROPEEN

(11) **EP 1 876 472 B1**
(45) Date de publication et mention de la délivrance du brevet: **16.05.2012**
(21) Numéro de dépôt: 07110611.6
(22) Date de dépôt: 20.06.2007
(51) Int. Cl.: G01V 1/38, G01V 11/00, B66D 3/04

(54) **Poulis d'assistance au reploiement/déploiement d'un système hétérogène se comportant différemment selon deux états successifs et dispositif correspondant**
Hilfsrolle zum Rückfalten/Entfalten eines heterogenen Systems, das sich in zwei aufeinander folgenden Zuständen verschieden verhält, und entsprechende Vorrichtung
Assistance pulley for retracting/extending a heterogeneous system that behaves differently according to two successive states and corresponding device

(30) Priorité: 07.07.2006 FR 0606229
(43) Date de publication de la demande: 09.01.2008
(73) Titulaire: Sercel, 44470 Carquefou (FR)
(72) Inventeur: Pesnel, Florent, 31110, MONTAUBAN DE LUCHON (FR)
(74) Mandataire: Larcher, Dominique

(56) Documents cités:
- EP-A- 1 385 022
- FR-A1- 2 293 355
- FR-A1- 2 572 048
- US-A- 1 968 321
- US-A- 3 042 374

## Description

Le domaine de l'invention est celui des équipements de manutention. Plus précisément, l'invention concerne un dispositif d'assistance au déploiement/reploiement d'un système hétérogène comprenant des modules reliés entre eux par des moyens de liaison.

Un dispositif selon l'invention est destiné à fournir une assistance à l'implantation de modules dans un milieu, ce dernier pouvant être une cavité telle qu'un puits, ou encore un milieu aquatique tel que l'océan.

Une application particulière de l'invention concerne les puits de forage.

Au cours de la réalisation ou l'exploitation des puits de forage, on cherche généralement à modéliser le milieu autour du puits, ceci par l'étude géophysique de celui-ci.

Pour cela, on fait descendre dans le puits des sondes sismiques (constituant des modules) à différentes profondeurs successives.

Classiquement, ces sondes se présentent sous forme d'éléments tubulaires et sont équipées d'un appareillage de mesures destiné à l'étude des formations géologiques rencontrées ou à la réalisation d'opérations de prospections sismiques.

Ces sondes sont reliées les unes aux autres par un câble électro-porteur comprenant des lignes d'alimentation électrique de l'appareillage et des lignes de transmission de signaux.

A titre indicatif, les éléments tubulaires présentent couramment une longueur d'environ 0,6 mètres (et peuvent atteindre 1,7 m pour les plus gros modules) et les câbles une longueur d'environ 15 m.

L'ensemble formé par les câbles et les sondes est par exemple une chaîne « VSP » (Vertical Seismic Profile) ou tout autre chaîne de modules d'acquisition sismique, et constitue un système hétérogène au sens de l'invention.

En d'autres termes on qualifie un tel système d'hétérogène en ce sens qu'il est constitué par des composants de formes et dimensions différentes (par exemple les sondes, rigides sur leur longueur, et les câbles, souples et de section réduite par rapport aux sondes), impliquant des moyens de guidage pour leur déploiement/reploiement adaptés à chaque composant.

Actuellement, les sondes sont descendues une à une dans les puits de forage, leur raccordement aux câbles étant effectué au fur et à mesure de la descente de la chaîne VSP.

Bien entendu, les opérations d'assemblage des sondes avec les câbles nécessitent des temps d'intervention considérables et, de plus, sont effectués sur sites dans des conditions qui peuvent s'avérer en pratique non optimales (notamment du fait de l'encombrement du chantier, des conditions climatiques...).

De plus, le contrôle mécanique de l'assemblage est lui-même effectué au fur et à mesure de la descente de la chaîne VSP, ce contrôle étant généralement assuré par les personnes ayant procédé à l'assemblage. Bien entendu, cette phase d'auto-contrôle est réalisée avec le plus grand soin. Mais, le personnel en charge de ces opérations est aussi soumis à des considérations de productivité l'incitant à travailler à une cadence soutenue, ce qui peut être source d'erreurs et donc de dysfonctionnements.

Or, en pratique, on constate que, une fois la chaîne en place, il arrive de constater une rupture dans la transmission des données, rendant la chaîne inexploitable dans son ensemble. Ceci peut être dû à la défaillance d'un des composants de la chaîne et/ou à la connexion défaillante d'un des composants avec les câbles. Cette défaillance peut être localisée au niveau des premiers composants descendus dans le puits, et n'est constatée qu'une fois la chaîne complète installée. Il peut alors être nécessaire d'extraire la chaîne entièrement pour procéder à des vérifications, puis à réimplanter la chaîne une fois les défauts constatés corrigés.

Par ailleurs, les chaînes VSP actuelles comprennent un nombre de sondes relativement limité, compris entre 2 et 32.

S'agissant des chaînes à 32 sondes, celles-ci peuvent présenter une longueur de plusieurs centaines de mètres, ce qui implique des délais d'implantation (ou de retrait) importants.

Or, des chaînes pouvant comporter jusqu'à 100 niveaux ont récemment été proposées.

On comprend que les temps d'implantation des chaînes VSP dans les puits (ainsi que ceux pour leur enlèvement du puits) vont sensiblement être augmentés du fait de l'augmentation du nombre de sondes et des opérations de raccordement de celles-ci avec les câbles.

On note en outre que l'augmentation du nombre de sondes dans les chaînes VSP tend à alourdir la logistique de transport et/ou de stockage des différents composants de la chaîne.

Différentes techniques ont été proposées par l'art antérieur, notamment celles décrites dans les documents :
- US-1 968 321, selon lequel le dispositif pour supporter des câbles ou autres éléments flexibles comprend une série de poulies disposées en cercle ;
- US-3 042 374, selon lequel les poulies sont montées sur un support mobile, pour permettre la transition entre une portion de câble en acier et une portion de câble en aluminium, les deux portions étant reliées par un manchon ;
- EP-1 385 022, selon lequel un système d'étude sismique comprend un câble possédant une unité de détection agencée dans un dispositif de découplage facilitant le passage de l'unité sur une roue ;
- FR-2 293 355 et FR-2 572 048, selon lesquels un dispositif permet la manoeuvre d'éléments remarqués par un navire à l'aide d'une poulie montée sur un portique susceptible de prendre diverses positions par rapport au pont du navire.

L'invention a notamment pour objectif de pallier ces inconvénients de l'art antérieur.

Plus précisément, l'invention a pour objectif de proposer une technique de déploiement/reploiement de systèmes hétérogènes qui permette d'envisager des gains de temps notables par rapport aux solutions de l'art antérieur.

L'invention a également pour objectif de fournir une telle technique qui permette d'obtenir des gains en termes de fiabilité des raccordements des modules avec les moyens de liaison.

L'invention a aussi pour objectif de fournir une telle technique qui permette d'améliorer le contrôle de l'assemblage des composants du système hétérogène.

Un autre objectif de l'invention est de fournir une telle technique qui facilite le transport des composants de système hétérogène.

L'invention a encore pour objectif de fournir une telle technique qui soit simple de conception et facile à mettre en oeuvre.

Ces objectifs ainsi que d'autres qui apparaîtront par la suite, sont atteints grâce à l'invention qui a pour objet une poulie d'assistance au déploiement/reploiement d'un système hétérogène selon la revendication 1.

Ainsi, grâce à l'invention, il est possible de procéder à l'implantation d'un système hétérogène dont les modules et les moyens de liaison sont pré-connectés.

Le fonctionnement de la poulie qui va être exposé plus en détails par la suite permet le passage sur la poulie de composants structurellement très différents, tels que les sondes et les câbles d'une chaîne VSP ou les systèmes permettant l'étude du fond des océans (tels que les chaînes OBC (Ocean Bottom Cable)), ce qui ne pourrait être le cas avec une poulie classique.

En effet, les poulies traditionnelles ne permettent pas le passage de systèmes hétérogènes constitués de modules reliés entre eux par des moyens de liaison, ceci pour plusieurs raisons :
- les modules sont dans certaines applications constitués d'un corps longiligne susceptible de travailler en traction ; le passage de tels modules sur des poulies traditionnelles tendraient à faire subir des contraintes en flexion aux modules, ce qui pourrait entraîner une détérioration des composants intégrés dans le corps du module ;
- les câbles formeraient avec les modules, au passage d'une poulie traditionnelle, un angle relativement aigu (sauf à prévoir des poulies de dimensions très importantes), ce qui imposerait des contraintes relativement importantes au niveau des ancrages de câbles sur les modules, au risque de détériorer ces ancrages.

Une poulie selon l'invention évite ce genre de phénomène.

Le fait de pouvoir travailler avec des systèmes hétérogènes pré-connectés implique de nombreux avantages parmi lesquels :
- une diminution notable des délais d'intervention sur site, en supprimant, au moment de l'implantation du système hétérogène, les temps d'assemblage des modules avec les câbles ;
- l'assemblage des modules et des moyens de liaison peut être réalisé dans des conditions d'atelier plus adaptées à des opérations de précision et/ou de contrôle que sur site (celui-ci étant soumis aux conditions climatiques, et étant éventuellement encombré voire inconfortable) ;
- le pré-assemblage induit la possibilité d'un double contrôle (et donc d'une fiabilité accrue du système hétérogène assemblé) : un premier contrôle hors site permettant de vérifier le bon fonctionnement (transmission des données électroniques et/ou d'acquisition sismiques) de la chaîne dans son ensemble, et un deuxième contrôle sur site au fur et à mesure de la descente du système hétérogène ;
- des gains au plan logistique, le stockage et le transport du système hétérogène s'effectuant à l'état assemblé et non plus avec des composants séparés.

Selon une solution avantageuse, ladite poulie comprend deux flasques présentant entre eux un écartement permettant, successivement, de former un passage pour lesdits moyens de liaisons et de loger au moins partiellement lesdits modules.

De cette façon, un logement est formé pour les modules au moment du passage de ceux-ci sur la poulie, ce qui permet d'une part d'assurer efficacement leur guidage et, d'autre part, de les confiner entre les flasques évitant ainsi des interférences éventuelles avec des éléments de structure environnants, voire avec des personnes à proximité du dispositif.

Lesdits premiers moyens de coopération comprennent des moyens supports desdits moyens de liaison, mobiles et destinés à être entraînés par lesdits moyens de liaison, lesdits premiers moyens de coopération comprenant préférentiellement un chemin de roulement.

On obtient ainsi un moyen simple et efficace pour faire transiter les moyens de liaison sur la poulie sans entraîner la rotation de celle-ci autour de son axe.

Selon un mode de réalisation avantageux, lesdits premiers moyens de coopération comprennent une série de galets.

On constitue ainsi les premiers moyens de coopération selon une conception simple et peu coûteuse à réaliser.

Dans ce cas, lesdits galets présentent préférentiellement un diamètre sensiblement identique entre eux et sont montés sur des axes définissant entre eux, vus de profil, un arc de cercle.

On favorise ainsi la courbure des moyens de liaisons lors de leur passage sur la poulie, ceci en évitant la formation d'un angle trop important aux extrémités du chemin de roulement.

On note que la courbure de la surface de roulement peut être obtenue avec un agencement différent selon d'autres modes de réalisation envisageables, par exemple en modifiant leur diamètre et/ou en les décalant les uns par rapport aux autres.

On note également qu'une bande de roulement sans fin peut être rapportée sur ou autour des galets.

De ce fait, les moyens de liaison, de par leur souplesse, épousent la forme en arc de cercle définie par la surface de roulement des galets et restent en appui sur ceux-ci.

Avantageusement, lesdits axes desdits galets sont portés par lesdits flasques.

On obtient de cette façon un ensemble compact, simple de conception et facile à monter.

Selon une autre caractéristique, lesdits deuxièmes moyens de coopération comprennent au moins un moyen d'entraînement contre lequel lesdits modules sont destinés à venir en appui.

Dans ce cas, selon un premier mode de réalisation ledit ou lesdits moyens d'entraînement comprennent au moins une butée montée entre lesdits flasques et placée sur la trajectoire desdits modules lors du reploiement/déploiement dudit système hétérogène.

Selon un deuxième mode de réalisation préférentiel, lesdits flasques présentent une zone de repliement l'un vers l'autre de façon à former lesdits moyens d'entraînement.

Un agencement selon l'un ou l'autre de ces modes de réalisation s'avère particulièrement simple et efficace mécaniquement. Comme cela va être expliqué plus en détails par la suite, le passage des modules entre les flasques implique une coopération avec le moyen d'entraînement correspondant et, par la suite du déplacement du système hétérogène, l'entraînement en rotation de la poulie, ceci sans risque de défaillance de la poulie.

Avantageusement, la poulie comprend deux moyens d'entraînement, l'une correspondant au déploiement du système hétérogène, l'autre correspondant au reploiement du système hétérogène.

On comprend clairement qu'une poulie selon l'invention ainsi constituée est prévu tant pour le déploiement que le reploiement d'un système hétérogène.

Selon une solution préférée, la poulie comprend des moyens de rappel tendant à amener ladite poulie dudit deuxième état audit premier état.

La poulie peut de cette façon passer automatiquement d'un état de fonctionnement à l'autre, ceci en coïncidence avec le défilement du système hétérogène.

Dans ce cas, lesdits moyens de rappel comprennent préférentiellement au moins un contrepoids placé de façon diamétralement opposé auxdits premiers moyens de coopération par rapport audit axe de ladite poulie.

Ainsi, on obtient aisément, avec des moyens simples à mettre en oeuvre, le retour de la poulie dans sa position correspondante au passage des moyens de liaisons, ceci par un basculement provoqué par le contrepoids.

On note que le rappel de la poulie peut être obtenu de façon générale par tout système permettant d'excentrer le centre de gravité de la poulie par rapport à son axe de rotation.

Préférentiellement, lesdits moyens de rappel comprennent des moyens de coopération transitoire avec lesdits moyens de liaison.

On forme de cette façon un support sur lequel les modules reposent au fur et à mesure de la rotation de la poulie, ceci en donnant une orientation prédéterminée aux modules.

L'invention concerne également un dispositif d'assistance au déploiement/reploiement d'un système hétérogène comprenant des modules destinés à être implantés ou étant implantés dans un milieu, lesdits modules étant reliés par des moyens de liaison, ledit dispositif comprenant au moins une poulie selon la revendication 1.

Selon un mode de réalisation préféré, le dispositif comprend des moyens de reprise du poids dudit système hétérogène externes à ladite poulie.

Les systèmes hétérogènes peuvent, comme indiqué précédemment en référence aux chaînes VSP, atteindre des longueurs importantes et, par conséquent, un poids considérable (environ 2 tonnes).

Une telle caractéristique du dispositif permet donc de réduire de façon notable les contraintes mécaniques qui s'exercent sur la poulie du fait du poids du système hétérogène.

D'autres caractéristiques et avantage de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une représentations schématique d'un dispositif selon l'invention ;
- les figures 2 à 5 sont des représentations schématiques d'un dispositif selon l'invention, illustrant des phases successives de fonctionnement ;
- les figures 6 et 7 sont des vues d'un mode de réalisation préférentiel de l'invention, respectivement vu de profil et de face ;
- la figure 8 est une vue partielle d'une poulie selon un mode de réalisation préférentiel de l'invention, faisant apparaître des moyens de coopération transitoire avec les moyens de liaison.

Comme indiqué précédemment, le principe de l'invention réside dans le fait de concevoir une poulie de telle sorte qu'elle soit fixe en rotation lors du passage de moyens de liaison d'un système hétérogène, et entraînée en rotation par le passage des modules du système hétérogène.

De cette façon, les moyens de liaison transitent sur la poulie tandis qu'elle est fixe, ceux-ci épousant transitoirement la forme de la poulie, tandis que les modules, rigides, tournent autour de l'axe de la poulie en entraînant la poulie avec eux.

Pour cela, la poulie comprend des premiers moyens de coopération destinés à coopérer avec les moyens de liaison et des deuxièmes moyens de coopération destinés à coopérer avec les modules.

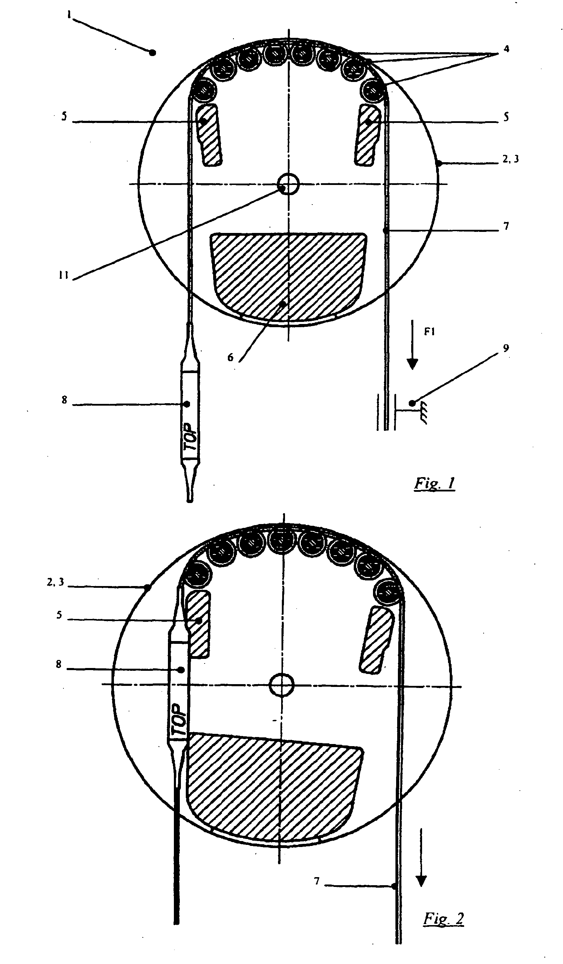

Selon le mode de réalisation préférentiel de l'invention illustré par la figure 1, le dispositif comprend :
- une poulie 1 montée rotative autour d'un axe 11, et comprenant deux flasques 2, 3 de forme circulaire et écartés l'un de l'autre de telle sorte qu'ils ménagent entre eux un espace à l'intérieur duquel peut transiter le système hétérogène ;
- des moyens supports des moyens de liaisons, constitués par une série de galets 4 montés libres à rotation ;
- deux organes d'entraînement formant butées 5 montées entre les flasques 2, 3 et contre lesquels les modules sont destinés à venir en appui, de telle sorte que le déplacement des modules entraîne la poulie en rotation autour de son axe.

Préférentiellement, l'écartement entre les flasques 2, 3 et le diamètre de ceux-ci sont prévus en fonction des dimensions et formes des modules, ceci en vue que les modules puissent être logés complètement entre les flasques lorsque les modules passent sur la poulie.

Par ailleurs, les galets 4 sont chacun montés sur un axe supporté par les flasques 2, 3.

De plus, tel que cela apparaît clairement sur la figure 1, les galets 4 présentent tous le même diamètre et définissent un chemin de roulement incurvé sensiblement parallèle à la portion du périmètre des flasques au voisinage desquels ils sont montés.

Selon une autre caractéristique du dispositif, un contrepoids 6 est monté entre les flasques 2, 3 en une position diamétralement opposée à celle du chemin de roulement défini par les galets, par rapport à l'axe 11.

Le fonctionnement du dispositif qui vient d'être décrit est explicité en référence aux figures 1 à 5.

La suite de la description est faite en référence à l'application d'un dispositif selon l'invention à un puits de forage à l'aplomb duquel est montée la poulie 1. Dans ce contexte, le système hétérogène que l'on cherche à déployer/reployer est une chaîne de modules d'acquisition sismiques tels qu'une chaîne VSP, dans laquelle les modules sont des sondes sismiques et les moyens de liaison sont des câbles électriques et de transmission du signal.

On rappelle qu'un dispositif selon l'invention peut être destiné à d'autres systèmes hétérogènes et/ou à leur déploiement/reploiement dans d'autres milieux que les puits de forage. Par exemple, un dispositif selon l'invention peut être utilisé pour la descente de modules au fond d'un océan.

A titre indicatif, une poulie d'un dispositif selon l'invention destiné au déploiement/reploiement d'une chaîne VSP présente un diamètre extérieur d'environ 1,40 m.

Partant d'un état initial tel que celui illustré par la figure 1, le câble 7 est passé autour de la poulie 1, celle-ci présentant les galets 4 en sa partie supérieure et le câble reposant sur les galets 4.

En exerçant une traction (tel que symbolisé par la flèche F1) sur le câble, celui-ci circule sur les galets qui roulent sur eux-mêmes (les galets étant montés libres à rotation).

Pendant cette phase, la poulie reste fixe en rotation autour de son axe (ou quasiment, de légers mouvements oscillants de la poulie pouvant apparaître du fait par exemple de l'encrassement des galets sur leur axe, ceci pouvant provoquer une résistance susceptible de transmettre un léger couple aux flasques de la poulie).

Cette première phase se poursuit jusqu'à ce qu'une sonde 8 pénètre l'espace entre les flasques 2, 3 de la poulie et vienne au contact d'une butée 5 (placée de façon appropriée sur la trajectoire de la sonde).

On note que la forme des butées 5 est conçue de façon à épouser partiellement la forme de l'extrémité de la sonde avec laquelle la butée est destinée à coopérer.

Lorsqu'une sonde 8 est au contact d'une butée 5, et en poursuivant la traction sur le câble 7, la sonde exerce une poussée sur la butée 5 correspondante et entraîne la rotation de la poulie comme le montrent les figures 2 à 4 qui illustrent des étapes successives de rotation de la poulie.

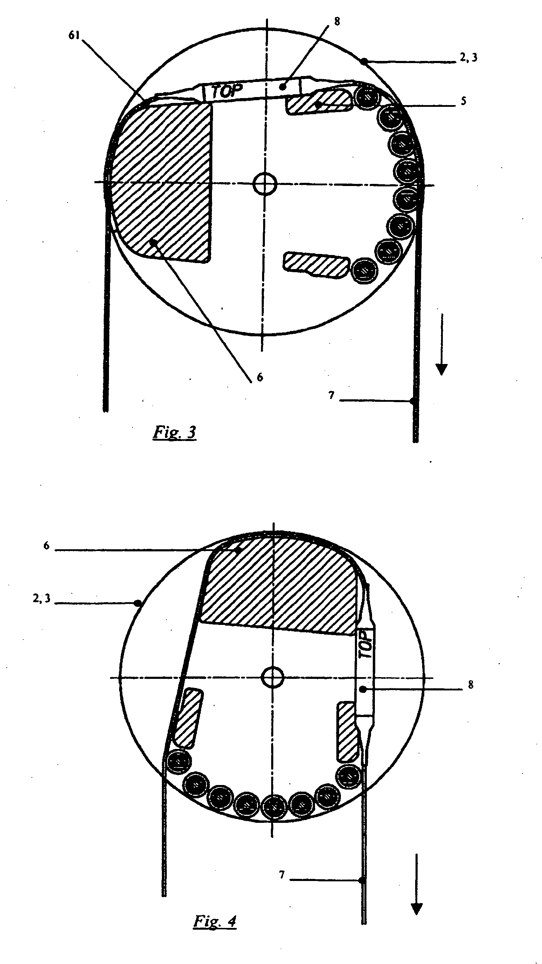

Tel que cela apparaît clairement sur la figure 3, la sonde 8 s'étend entre les butées 5 et le rebord 61 du contrepoids 6 (tous deux dans le prolongement l'un de l'autre), une extrémité de la sonde reposant sur le rebord 61 du contrepoids tandis que son autre extrémité repose sur la butée 5. On évite ainsi un basculement de l'extrémité arrière de la sonde (dans le sens de son déplacement) vers l'axe de la poutre.

La rotation de la poulie se poursuit jusqu'à environ 180° (figure 4) à partir de la position initiale, la sonde étant amenée progressivement dans une position dans laquelle elle est dégagée de l'espace entre les flasques 2, 3 de la poulie.

Le dégagement de la sonde est prévu pour s'opérer après une rotation de la poulie légèrement supérieure à 180° par rapport à sa position initiale, ce qui amène le contrepoids (alors en partie supérieure de la poulie) dans une position ayant dépassé la position d'équilibre instable de la poulie.

De ce fait, lorsque la sonde est totalement dégagée de la poulie, le contrepoids, de par l'effet de gravité, bascule vers une position d'équilibre stable correspondant à la figure 1 et tend donc à ramener la poulie dans une position correspondant à l'étape initiale.

Pendant cette phase de rappel, les galets 4 roulent contre le câble 7, celui-ci pouvant pendant cette phase être maintenu fixement ou être lui-même entraîné.

La cinématique qui vient d'être décrite correspond au déploiement d'une chaîne VSP. Le dispositif d'entraînement est adapté au reploiement de la chaîne de par la présence d'une deuxième butée 5 qui coopère avec les sondes lorsque celles-ci sont remontées des puits (le sens de défilement de la chaîne et la rotation de la poulie étant bien entendu inversés par rapport au fonctionnement qui vient d'être décrit).

Par ailleurs, un système de portage 9 de la chaîne VSP peut-être prévu en parallèle de la poulie pour reprendre séquentiellement le poids de la chaîne VSP descendue dans le puits. Un tel système, désigné par le terme de « clamp » se présente essentiellement sous la forme de deux mâchoires venant se fermer sous le module et définissant un logement pour celui-ci en vue de supporter le poids de la chaîne.

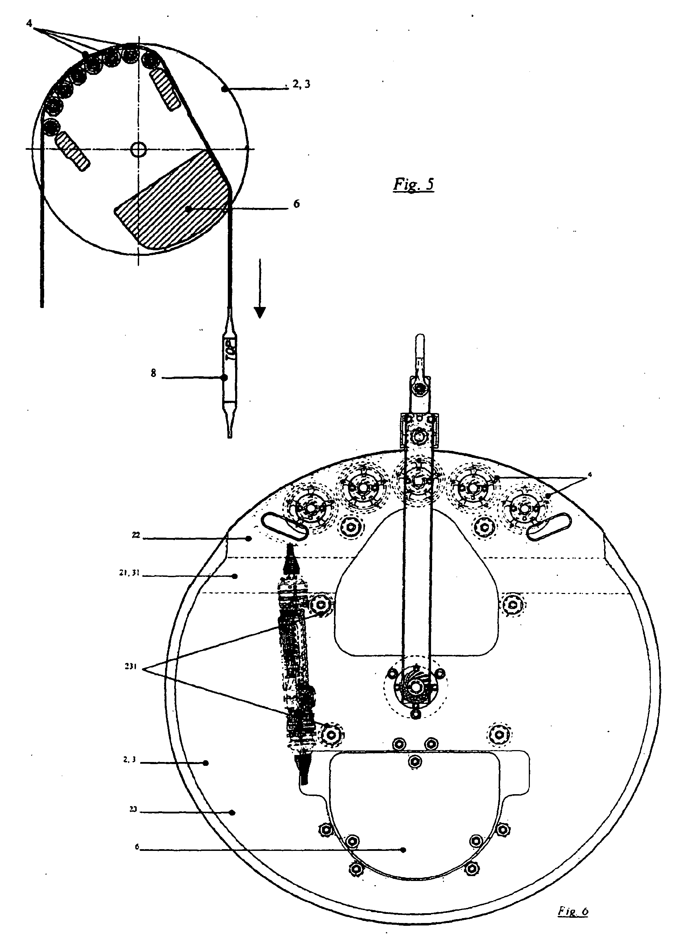

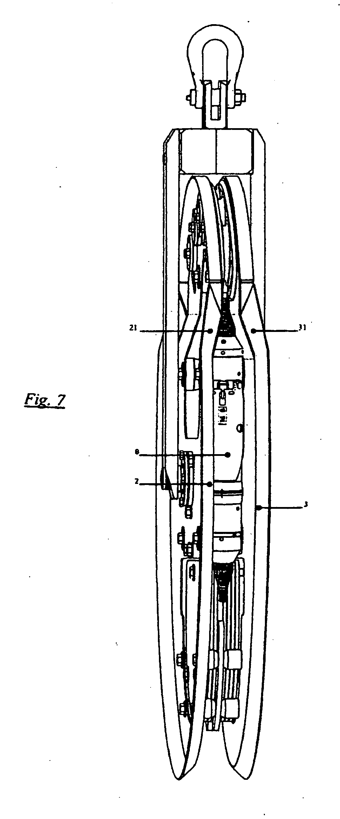

Les figures 6 à 8 illustrent un mode de réalisation préférentiel de l'invention.

Tel que cela apparaît, la poulie comprend deux flasques 2, 3 réalisés par exemple par emboutissage d'une tôle.

Dans la position illustrée par la figure 6, la poulie présente en sa partie supérieure une série de galets 4, et, en sa partie inférieure un contrepoids 6.

Selon le présent mode de réalisation, les flasques 2, 3 présentent chacun une zone de repliement, respectivement 21, 31 de façon à ménager entre eux trois espaces :
- un espace 22 dans lequel les flasques 2, 3 présentent entre eux un écartement correspondant approximativement au diamètre des moyens de liaison, les galets 4 formant un chemin de roulement s'inscrivant dans cet espace ;
- une zone 21, 31 formant moyens d'entraînement de la poulie par les modules, le rétrécissement formé par le repliement l'un vers l'autre des flasques formant une butée contre laquelle l'extrémité des modules vient en appui ;
- un espace 23 dans lequel les flasques 2, 3 présentent entre eux un écartement correspondant approximativement au diamètre des modules.

On note que des organes 231, présentant par exemple la forme de diabolos, sont montés entre les flasques 2, 3 dans l'espace 23, ces organes 231 étant destinés à former des appuis pour les modules (sondes) 8 qui peuvent ainsi reposer sur les organes 231 pendant la rotation de la poulie (ceci constituant un mode de réalisation préférentiel par rapport au schéma de principe de la figure 3 selon lequel la sonde repose sur un rebord du contrepoids).

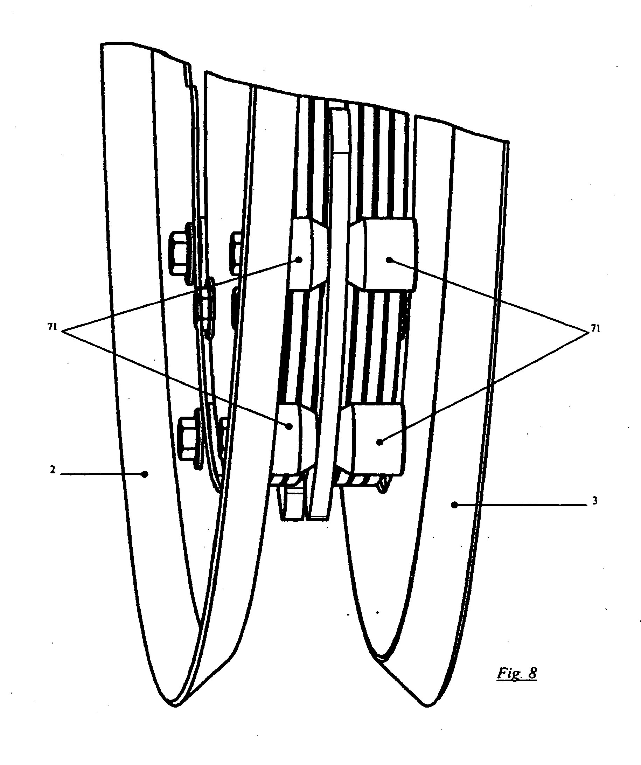

Par ailleurs, en référence à la figure 8, la poulie comprend également des moyens de coopération transitoire 71 avec les moyens de liaison (câbles) 7.

Ces moyens 71 comprennent deux paires de plots présentant une partie terminale tronconique. La forme des plots et l'écartement entre eux sont prévus pour engendrer un phénomène de léger pincement des câbles lorsque ceux-ci viennent s'inscrire entre les plots.

Cette coopération transitoire intervient en particulier lorsque la poulie occupe une position telle que celle illustrée par la figure 4.

En effet, dans cette position, il est préférable d'orienter le sens de rotation de la poulie lors du retour de la poulie au premier état (correspondant à la position de la poulie illustrée par la figure 1), ceci pour éviter le risque que, sous l'effet du contrepoids, la poulie bascule dans un sens opposé au défilement du système hétérogène.

Ainsi, grâce aux moyens de coopération transitoire 71, le câble, qui est entraîné par un système externe à la poulie, tend à entraîner la poulie dans le sens de défilement du système hétérogène du fait du pincement des moyens de liaison entre ces moyens 71.

## Revendications

1. Poulie d'assistance du déploiement/reploiement d'un système hétérogène comprenant des modules (8) destinés à être implantés ou étant implantés dans un milieu, lesdits modules (8) étant reliés par des moyens de liaison (7), ladite poulie étant destinée à être montée rotative sur un axe (11) placé au-dessus dudit milieu, ladite poulie comprenant des premiers moyens de coopération destinés à coopérer avec lesdits moyens de liaison (7),
**caractérisée en ce que** ladite poulie comprend des deuxièmes moyens de coopération destinés à coopérer avec lesdits modules (8), lesdits premiers et deuxièmes moyens de coopération étant conçus de façon à provoquer deux états successifs de fonctionnement :
- un premier état, correspondant au passage desdits moyens de liaison, au cours duquel ladite poulie est essentiellement statique en rotation autour dudit axe (11) ;
- un deuxième état correspondant au passage desdits modules (8), au cours duquel ladite poulie est entraînée en rotation autour dudit axe (11),
lesdits premiers moyens de coopération comprenant des moyens supports desdits moyens de liaison (7), mobiles et destinés à être entraînés par lesdits moyens de liaison (7), lesdits deuxièmes moyens de coopération comprenant au moins un moyen d'entraînement contre lequel lesdits modules (8) sont destinés à venir en appui.

2. Poulie selon la revendication 1, **caractérisée en ce qu'**elle comprend deux flasques (2), (3) présentant entre eux un écartement permettant, successivement, de former un passage pour lesdits moyens de liaisons (7) et de loger au moins partiellement lesdits modules (8).

3. Poulie selon l'une des revendications 1 et 2, **caractérisée en ce que** lesdits premiers moyens de coopération forment un chemin de roulement.

4. Poulie selon l'une quelconque des revendications 1 à 3, **caractérisée en ce que** lesdits premiers moyens de coopération comprennent une série de galets (4).

5. Poulie selon la revendication 4, **caractérisée en ce que** lesdits galets (4) présentent un diamètre sensiblement identique entre eux et sont montés sur des axes définissant entre eux, vus de profil, un arc de cercle.

6. Poulie selon les revendications 2 et 5, **caractérisée en ce que** lesdits axes desdits galets (4) sont portés par lesdits flasques (2), (3).

7. Poulie selon la revendication 2, **caractérisée en ce que** ledit ou lesdits moyens d'entraînement comprennent au moins une butée (5) montée entre lesdits flasques (2), (3) et placée sur la trajectoire desdits modules (8) lors du reploiement/déploiement dudit système hétérogène.

8. Poulie selon la revendication 2, **caractérisée en ce que** lesdits flasques (2), (3) présentent une zone de repliement (21), (31) l'un vers l'autre de façon à former lesdits moyens d'entraînement.

9. Poulie selon l'une quelconque des revendications 1 à 8, **caractérisée en ce qu'**il comprend deux moyens d'entraînement, l'un correspondant au déploiement du système hétérogène, l'autre correspondant au reploiement du système hétérogène.

10. Poulie selon l'une quelconque des revendications 1 à 9, **caractérisée en ce qu'**il comprend des moyens de rappel tendant à amener ladite poulie dudit deuxième état audit premier état.

11. Poulie selon la revendication 10, **caractérisée en ce que** lesdits moyens de rappel comprennent au moins un contrepoids (6) placé de façon diamétralement opposé auxdits premiers moyens de coopération par rapport audit axe (11) de ladite poulie.

12. Poulie selon l'une des revendications 10 et 11, **caractérisé en ce que** lesdits moyens de rappel comprennent des moyens de coopération transitoire (71) avec lesdits moyens de liaison.

13. Poulie selon les revendications 1 à 12, **caractérisée en ce qu'**elle comprend des moyens d'appui (231) contre lesquels lesdits modules sont destinés à s'étendre dans ledit deuxième état.

14. Dispositif d'assistance au déploiement/reploiement d'un système hétérogène comprenant des modules (8) destinés à être implantés ou étant implantés dans un milieu, lesdits modules étant reliés par des moyens de liaison (7), ledit dispositif comprenant au moins une poulie de renvoi (1) selon la revendication 1.

15. Dispositif selon la revendication 14, **caractérisé en ce qu'**il comprend des moyens de reprise du poids dudit système hétérogène externes à ladite poulie.

## Claims

1. Pulley for assistance in extending / retracting a heterogeneous system comprising modules (8) which are designed to be implanted or are implanted in an environment, said modules (8) being connected by connection means (7),said pulley being designed to be fitted such as to rotate on a shaft (11) which is placed above said environment, said pulley comprising first co-operation means which are designed to co-operate with said connection means (7),
**characterised in that** the said pulley comprises second co-operation means which are designed to co-operate with said modules (8), said first and second co-operation means being designed such as to give rise to two successive functioning states:
- a first state, corresponding to the passage of said connection means, during which said pulley is substantially static in rotation around said shaft (11);
- a second state corresponding to the passage of said modules (8), during which said pulley is rotated around said shaft (11),
said first co-operation means comprising means to support said connection means (7), which are mobile and designed to be driven by said connection means (7), said second co-operation means comprising at least one drive means against which said modules (8) are designed to be supported.

2. Pulley according to claim 1, **characterised in that** it comprises two flanges (2), (3), which have between one another spacing which makes it possible in succession to form a passage for said connection means (7) and to accommodate said modules (8) at least partially.

3. Pulley according to one of claims 1 and 2, **characterised in that** said first co-operation means form a bearing race.

4. Pulley according to any one of claims 1 to 3, **characterised in that** said first co-operation means comprise a series of rollers (4).

5. Pulley according to claim 4, **characterised in that** the said rollers (4) have a diameter which is substantially identical to one another, and are fitted on shafts which define an arc of a circle between one another, when seen in profile.

6. Pulley according to claims 2 and 5, **characterised in that** said shafts of the said rollers (4) are supported by said flanges (2), (3).

7. Pulley according to claim 2, **characterised in that** said drive means comprise at least one stop (5) which is fitted between said flanges (2), (3), and is placed on the trajectory of said modules (8) when said heterogeneous system is retracted / extended.

8. Pulley according to claim 2, **characterised in that** the said flanges (2), (3) have an area of bending back (21), (31) towards one another such as to form said drive means.

9. Pulley according to any one of claims 1 to 8, **characterised in that** it comprises two drive means, one corresponding to the extension of the heterogeneous system, and the other corresponding to the retraction of the heterogeneous system.

10. Pulley according to any one of claims 1 to 9, **characterised in that** it comprises return means which tend to return said pulley from said second state to said first state.

11. Pulley according to claim 10, **characterised in that** said return means comprise at least one counterweight (6) which is placed diametrically opposite said first co-operation means, relative to said shaft (11) of said pulley.

12. Pulley according to one of claims 10 and 11, **characterised in that** said return means comprise means (71) for transitory co-operation with said connection means.

13. Pulley according to claims 1 to 12, **characterised in that** it comprises support means (231) against which said modules are designed to extend in said second state.

14. Device for assistance in extending / retracting a heterogeneous system comprising modules (8) which are designed to be implanted or are implanted in an environment, said modules (8) being connected by connection means (7), said device comprising at least one return pulley (1) according to claim 1.

15. Device according to claim 14, **characterised in that** it comprises means for recovery of the weight of said heterogeneous system which are on the exterior of said pulley.

## Patentansprüche

1. Hilfs-Seilrolle zum Entfalten/Rückfalten eines heterogenen Systems, das Module (8) umfasst, welche in einem Milieu eingesetzt werden sollen bzw. dort eingesetzt sind, wobei die besagten Module (8) über Verbindungsmittel (7) verbunden sind und wobei die besagte Seilrolle drehbar auf einer Achse (11) angebracht werden soll, welche sich oberhalb des besagten Milieus befindet, wobei die besagte Seilrolle erste Mittel zum Zusammenwirken aufweist, welche mit den besagten Verbindungsmitteln (7) zusammenwirken sollen,
**dadurch gekennzeichnet, dass** die besagte Seilrolle zweite Mittel zum Zusammenwirken aufweist, welche mit den besagten Modulen (8) zusammenwirken sollen, wobei die besagten ersten und zweiten Zusammenarbeitsmittel so konzipiert sind, dass sie zwei aufeinander folgende Betriebszustände verursachen:
- ein erster Zustand, der dem Durchgang der besagten Verbindungsmittel entspricht, in dessen Verlauf sich die besagte Seilrolle im Wesentlichen statisch drehbar um die besagte Achse (11) befindet,
- ein zweiter Zustand, der dem Durchgang der besagten Module (8) entspricht, in dessen Verlauf die besagte Seilrolle drehbar um die besagte Achse (11) mitgenommen wird,
wobei die besagten ersten Mittel zum Zusammenwirken über Stützmittel der besagten Verbindungsmittel (7) verfügen, die beweglich sind und von den besagten Verbindungsmitteln (7) mitgenommen werden sollen, wobei die besagten zweiten Mittel zum Zusammenwirken mindestens über ein Mittel zum Mitnehmen verfügen, gegen das/die sich die besagten Module (8) abstützen sollen.

2. Seilrolle nach Anspruch 1, **dadurch gekennzeichnet, dass** sie zwei Seitenscheiben (2), (3), aufweist, welche untereinander einen Abstand aufweisen, der es nacheinander ermöglicht, einen Durchgang für die besagten Verbindungsmittel (7) zu bilden und zumindest teilweise die besagten Module (8) aufzunehmen.

3. Seilrolle nach einem der Ansprüche 1 oder 2, **dadurch gekennzeichnet, dass** die besagten ersten Mittel zum Zusammenwirken eine Bahn zum Rollen bilden.

4. Seilrolle nach einem der Ansprüche 1 bis 3, **dadurch gekennzeichnet, dass** die besagten ersten Mittel zum Zusammenwirken eine Reihe von kleinen Rollen (4) aufweisen.

5. Seilrolle nach Anspruch 4, **dadurch gekennzeichnet, dass** die Durchmesser der besagten kleinen Rollen (4) in etwa untereinander identisch sind und, dass diese kleinen Rollen auf Achsen angebracht sind, die im Profil betrachtet, untereinander einen Kreisbogen bilden.

6. Seilrolle nach den Ansprüchen 2 und 5, **dadurch gekennzeichnet, dass** die besagten Achsen der besagten kleinen Rollen (4) durch die besagten Seitenscheiben (2), (3) getragen werden.

7. Seilrolle nach Anspruch 2, **dadurch gekennzeichnet, dass** das besagte/die besagten Mittel zum Mitnehmen mindestens ein Anschlagteil (5) aufweist/aufweisen, das/die zwischen den besagten Seitenscheiben (2), (3) angebracht ist/sind und beim Rückfalten/Entfalten des besagten heterogenen Systems auf der Laufbahn der besagten Module (8) liegt / liegen.

8. Seilrolle nach Anspruch 2, **dadurch gekennzeichnet, dass** die besagten Seitenscheiben (2), (3) jeweils einen Bereich (21), (31) zur gegenseitigen Annäherung aufweisen, um die besagten Mittel zum Mitnehmen zu bilden.

9. Seilrolle nach einem der Ansprüche 1 bis 8, **dadurch gekennzeichnet, dass** sie zwei Mittel zum Mitnehmen aufweist, wobei das eine dem Entfalten des heterogenen Systems und das andere dem Rückfalten des heterogenen Systems entspricht.

10. Seilrolle nach einem der Ansprüche 1 bis 9, **dadurch gekennzeichnet, dass** sie über Mittel zum Rückholen verfügt, die danach streben, die besagte Seilrolle vom besagten zweiten Zustand in den besagten ersten Zustand zu überführen.

11. Seilrolle nach Anspruch 10, **dadurch gekennzeichnet, dass** die besagten Mittel zum Rückholen mindestens ein Gegengewicht (6) aufweisen, das diametral entgegengesetzt zu den besagten ersten Mittel zum Zusammenwirken im Verhältnis zur besagten Achse (11) der besagten Seilrolle angebracht ist.

12. Seilrolle nach einem der Ansprüche 10 oder 11, **dadurch gekennzeichnet, dass** die besagten Mittel zum Rückholen vorübergehende Mittel zum Zusammenwirken (71) mit den besagten Verbindungsmitteln aufweisen.

13. Seilrolle nach einem der Ansprüche 1 bis 12, **dadurch gekennzeichnet, dass** sie Stützmittel (231) aufweist, gegen welche sich die besagten Module im besagten zweiten Zustand anlehnen sollen.

14. Hilfsvorrichtung für das Entfalten/Rückfalten eines heterogenen Systems, welches Module (8) aufweist, die in einem Milieu eingesetzt werden sollen bzw. dort eingesetzt sind, wobei die besagten Module durch Verbindungsmittel (7) verbunden sind und wobei die besagte Vorrichtung mindestens eine Rückholseilrolle (1) nach Anspruch 1 aufweist.

15. Vorrichtung nach Anspruch 14, **dadurch gekennzeichnet, dass** sie über Mittel zur Wiederaufnahme des Gewichtes des besagten heterogenen Systems verfügt, die sich außerhalb der besagten Seilrolle befinden.
